# Europäisches Patentamt
# European Patent Office
# Office européen des brevets

(11) Veröffentlichungsnummer: **0 001 063**
**B1**

(12) **EUROPÄISCHE PATENTSCHRIFT**

(45) Veröffentlichungstag der Patentschrift: **08.07.81**

(21) Anmeldenummer: **78100707.5**

(22) Anmeldetag: **21.08.78**

(51) Int. Cl.³: **B 29 D 7/20**

(54) **Verfahren zur Waschung und/oder Trocknung von flüssigkeitshaltigen Flächengebilden hergestellt durch Fällung mit Elektrolyten oder thermische oder elektrische Koagulation aus natürlichem und/oder synthetischem Kautschuk.**

(30) Priorität: **03.09.77 DE 2739851**
**03.09.77 DE 2739852**
**03.09.77 DE 2739853**

(43) Veröffentlichungstag der Anmeldung:
**21.03.79 Patentblatt 79/6**

(45) Bekanntmachung des Hinweises auf die Patenterteilung:
**08.07.81 Patentblatt 81/27**

(84) Benannte Vertragsstaaten:
**BE DE FR GB NL**

(56) Entgegenhaltungen:
**DE - A - 1 501 376**
**DE - A - 1 813 462**
**DE - B - 1 753 566**
**FR - A - 1 205 009**
**FR - A - 1 431 633**
**FR - A - 1 547 864**

(73) Patentinhaber: **BAYER AG**
**Zentralbereich Patente, Marken und Lizenzen**
**D-5090 Leverkusen 1, Bayerwerk (DE)**

(72) Erfinder: **Belil Creixell, Francisco**
**c/o Mobay Chemical Corporation**
**New Martinsville W.Va 26155 (US)**
Erfinder: **Simon, Dieter**
**Katharinental 27**
**D-5060 Bergisch-Gladbach 2 (DE)**
Erfinder: **Ehrig, Bodo, Dr.**
**Pommernallee 5**
**D-4047 Dormagen 1 (DE)**

Courier Press, Leamington Spa, England.

# 0 001 063

**Verfahren zur Waschung und/oder Trocknung von flüssigkeitshaltigen Flächengebilden hergestellt durch Fällung mit Elektrolyten oder thermische oder elektrische Koagulation aus natürlichem und/oder synthetischem Kautschuk**

Die vorliegende Anmeldung betrifft ein Verfahren zur Waschung und/oder Trocknung von flüssigkeitshaltigen Flächengebilden hergestellt durch Fällung mit Elektrolyten oder thermische oder elektrische Koagulation aus natürlichem und/oder synthetischem Kautschuk.

Derartige Flächengebilde enthalten abhängig von ihrer Herstellungsweise noch Flüssigkeiten, die im Flächengebilde dispers verteilt sind, und die darin gelosten Stoffe.

Durch Auswaschen mit einer geeigneten Waschflüssigkeit, können diese aus den Flächengebilden ausgewaschen werden. Üblicherweise werden sie zu diesem Zweck mit der Waschflüssigkeit berieselt und anschließend sowohl die Waschflüssigkeit wie die im Herstellungsprozeß eingesetzte Flüssigkeit auf mechanischem und/oder thermischem Wege entfernt. In den meisten Fällen ist aus Kostengründen der rein thermische Weg ungünstig. Andererseits läßt sich auf mechanische Weise die Flüssigkeit nach den bisherigen Methoden nicht vollständig entfernen, so daß eine Kombination beider Verfahren in der Praxis üblich ist. Durch Anwendung von z.B. Walzen, Schnecken oder Pressen wird die Struktur des Flächengebildes nachteilig beeinflußt. Dadurch wird die nachgeschaltete thermische Trocknung erschwert.

Aus der FR—A—1 547 864 ist die Behandlung von wasserdurchlässigem Material mit Waschflüssigkeiten unter Einwirkung einer Druckdifferenz bekannt. Hierfür geeignete Materialien sind z.B. Gewebe, Gewirke und Nadelfilze, d.h. solche, die aufgrund ihrer Struktur durchlässig für Gase und Flüssigkeiten sind.

Es wurde nun gefunden, daß die Waschung und/oder Trocknung von Flächengebilden, die aus Kautschuk bestehen, mittels einer auf diese Flächengebilde einwirkenden Druckdifferenz durchgeführt werden kann. Durch die Einwirkung der Druckdifferenz werden diese von der auf sie aufgebrachten Waschflüssigkeit durchströmt und dabei von Lösungsmitteln befreit. Anstelle der Waschflüssigkeit oder anschließend strömt ein inertes gasförmiges Medium durch das Flächengebilde, wodurch die Flüssigkeiten bis zu einem gewünschten Wert abgetrennt werden können.

Gegenstand der Erfindung ist somit ein Verfahren zur Waschung und/oder Trocknung von flüssigkeitshaltigen Flächengebilden hergestellt durch Fällung mit Elektrolyten oder thermische oder elektrische Koagulation aus natürlichem und/oder synthetischem Kautschuk, dadurch gekennzeichnet. daß die Flächengebilde mittels einer auf sie einwirkenden Druckdifferenz von 1 mbar bis 6 bar von einer Waschflüssigkeit und/oder von einem inerten gasförmigen Medium durchströmt und dabei von Verunreinigungen bzw. der Waschflüssigkeit befreit und/oder getrocknet werden.

Zur Durchführung des erfindungsgemäßen Verfahrens wird das flüssigkeitshaltige Flächengebilde auf ein Transportband oder eine Transportwalze aufgebracht, die durchströmbar sind, wobei das Transportband aus einem oder mehreren übereinanderliegenden Geweben aus Metall und/oder Kunststoff/oder Textil mit gleichen oder unterschiedlichen offenen Flächen bestehen kann, und über eine geeignete, unter Druckdifferenz stehende Vorrichtung geführt. Geeignet für diesen Zweck sind z.B. bekannte Saugvorrichtungen wie Rohrsauger, Saugkästen, Saugwalzem und Trommelfilter. Die gesamte Vorrichtung für die Waschung und Trocknung ist in zwei Bereiche unterteilt, wobei im ersten Bereich das Flächengebilde von der Waschflüssigkeit durchströmt und von Verunreinigungen befreit und im zweiten Bereich von einem inerten gasförmigen Medium durchströmt und getrocknet wird. Falls gewünscht, ist es selbstverständlich auch möglich, je nach benutztem Bereich der Gesamtvorrichtung, das Flächengebilde nur zu waschen oder zu trocknen.

Die auf das Flächengebilde einwirkende Druckdifferenz kann 1 mbar bis 6 bar, vorzugsweise 100 mbar bis 3 bar betragen. Besonders bevorzugt ist eine Druckdifferenz von 200 bis 500 mbar beim Waschen und von 400 bis 700 mbar beim Trocknen. Die jeweils günstigste Druckdifferenz, die naturgemäß in gewissem Umfang von der Art des eingesetzten Flächengebildes abhängt, kann durch einfache Versuche leicht ermittelt werden.

Die Geschwindigkeit, mit der das Flächengebilde durch die Vorrichtung geführt wird, kann im Bereich von 0,5 bis 1000 m pro Minute, vorzugsweise von 1 bis 200 m pro Minute und besonders bevorzugt von 5 bis 100 m pro Minute gewählt und so jede gewünschte Wasch- und Trocknungszeit eingestellt werden.

Die Verweilzeit des Flächengebildes in der Vorrichtung kann zwischen 0,5 und 1000 Sekunden liegen. Bevorzugt sind Verweilzeiten von 1 bis 500 Sekunden und besonders bevorzugt solche von 5 bis 200 Sekunden.

Weiterhin ist die Geschwindigkeit der Waschung und/oder Trocknung abhängig von der Art des Polymers und der abzutrennenden Flüssigkeiten von der Temperatur des gasförmigen Mediums und der des Flächengebildes von der Struktur des Flächengebildes sowie dessen Dicke.

Das erfindungsgemäße Verfahren kann auf alle Flächengebilde angewendet werden, die durchströmbar sind und durch thermische oder elektrische Koagulationsverfahren wie Gefrierkoagulation oder Elektrophorese, oder durch Fällung mit Elektrolyten hergestellt werden. Derartige Flächengebilde enthalten eine Vielzahl von Poren, die mit Flüssigkeit und darin gelösten Verunreinigungen gefüllt sind. Diese Flüssigkeit wird verdrängt und durch frische ersetzt, indem man dem Flächengebilde Waschflüs-

2

sigkeit zuführt und gleichzeitig nach dem erfindungsgemäßen Verfahren eine Druckdifferenz auf das Flächengebilde einwirken läßt. Dadruch wird in kurzer Zeit eine intensive Waschung erzielt. Durch. Zufuhr eines gasförmigen Mediums und Einwirkung einer Druckdifferenz wird die Flüssigkeit entfernt und das Flächengebilde getrocknet.

Als Flächengebilde im Sinne der Erfindung werden dreidimensionale Gebilde angesehen, deren eine Dimension wesentlich kleiner ist als die anderen. Das Gebilde besteht aus beliebig geformten Polymerteilchen die so zusammenhängen, daß sie einen porösen Körper bilden, der durchströmbar ist bzw. durch den Waschvorgang durchströmbar wird. Als bevorzugtes Flächengebilde werden Folien angesehen.

Als besonders geeignetes Polymermaterial gelten natürliche und/oder synthetische Kautschuke. Geeignete Synthesekautschuke sind Homo- oder Copolymerisate von konjugierten Dienen mit 4 bis 8 C-Atomen und deren Chlorsubstitutionsprodukte. Beispielhaft seien die Monomeren Butadien, Isopren, Dimethylbutadien, 2-Chlorbutadien (Chloropren) und 2,3-Dichlorbutadien genannt. Ebenso geeignet sind Copolymerisate dieser Monomeren mit Vinylaromaten wie Styrol und $\alpha$-Methylstyrol sowie Acrylnitril und Methacrylnitril. Ferner seien Äthylen-Propylen-Terpolymerisate und Äthylenvinylestercopolymerisate angeführt. Bevorzugt sind Folien aus Polychloropren und Butadienacrylnitrilcopolymerisaten.

Die Flachengebilde enthalten abhängig von ihren Herstellungsverfahren verschiedene Flüssigkeiten die nach dem erfindungsgemäßen Verfahren beseitigt werden können. Beispielhaft seien Wasser, Alkohole, Aceton, aromatische Kohlenwasserstoffe wie Benzol, Toluol, Xylol, aliphatische Kohlenwasserstoffe wie Pentan, Hexan, Heptan, Cyclohexan oder halogenhaltige Kohlenwasserstoffe wie Chloropren, Dichlorbuten, Chloroform, Tetrachlorkohlenstoff und Chlorbenzol erwähnt. Vorzugsweise enthalten die Flächengebilde Wasser.

Als Waschflüssigkeit sind die obengenannten Lösungsmitel geeignet, die die in den Flächengebilden vorhandenen Verunreinigungen durch einen Verdrängungs- und/oder Lösungsvorgang entfernen. Als bevorzugt einsetzbare Waschflüssigkeit gilt Wasser.

Das Waschverfahren wird so durchgeführt, daß auf der Seite der Flächengebilde mit höherem Druck eine Schicht von warmer oder kalter Waschflüssigkeit aufgetragen wird, die dann, hervorgerufen durch die bestehende Druckdifferenz, in das Flächengebilde eindringt und es durchströmt.

Als inertes gasförmiges Medium seien Luft, Kohlendioxid oder Stickstoff beispielsweise angeführt. Die Temperatur des Inertgases im erfindungsgemäßen Verfahren beträgt zweckmäßigerweise 10 bis 400°C, bevorzugt 20 bis 300°C, besonders bevorzugt 100 bis 200°C. Der jeweils günstigste Bereich kann durch einfache Versuche ermittelt werden.

Die Temperatur des Flächengebildes beträgt etwa 0 bis 400°C, bevorzugt 20 bis 300°C, besonders bevorzugt 50 bis 200°C.

Die Dicke des Flächengebildes beträgt 0,1 bis 50 mm, bevorzugt 0,2 bis 10 mm, besonders bevorzugt 0,3 bis 5 mm.

Der Flüssigkeitsentzug kann — sollte es empfehlenswert sein — auch in mehreren voneinander getrennten Stufen erfolgen. So ist es beispielsweise möglich, viel Flüssigkeit enthaltende Flächengebilde zunächst nach dem erfindungsgemäßen Verfahren vorzubehandeln und anschließend den Vorgang zu wiederholen. Bei Anwendung eines so aufgeteilten Flüssigkeitsentzuges empfiehlt es sich, in der ersten Stufe kaltes oder vorgewärmtes Inertgas von beispeilsweise 20 bis 120°C zu verwenden und in der Nachbehandlungsstufe warmes Inertgas von beispielsweise 120 bis 400°C einzusetzen, wobei das Inertgas der Nachbehandlung eine ne höhere Temperatur aufweist als das der Vorstufe.

Weiterhin ist es auch möglich, das erfindungsgemäße Verfahren nach den Flüssigkeitsentzugsstufen zur Kühlung des Flächengebildes einzusetzen. So ist z.B. folgender Ablauf durch dreimalige Anwendung der Verfahrensschritte denkbar:

— Vorentzug
— Hauptentzug
— Kühlung

Es ist selbstverständlich, daß bei dem Kühlvorgang das Inertgas kühler als das Flächengebilde selbst sein muß.

Das erfindungsgemäße Verfahren zur Waschung und/oder Trocknung von Flächengebilden hat gegenüber konventionellen Verfahren den Vorteil, daß es schonender und schneller verläuft und damit auch kostengünstiger durchgeführt werden kann. Die Flächengebilde werden im allgemeinen bis zu einem Endfeuchtigkeitsgehalt von 0,3 Gew.-% getrocknet. Nach dem Entzug der Flüssigkeit können die Flächengebilde, gegebenenfalls nach Zerkleinerung zu einem Granulat, nach bekannten Verfahren weiter verarbeitet werden. Das Granulat kann beispielsweise auf dem Klebstoffsektor eingesetzt werden oder bei der Herstellung von Reifen und technischen Gummiartikeln wie Kabel und Dichtungen.

Die folgenden Beispiele erläutern die Erfindung. Prozentangaben sind stets Gewichtsprozent.

*I. Waschung von Flächengebilden*

Beispiel 1—4

Eine durch Gefrierkoagulation hergestellte Polychloprenfolie von 1,7 mm Dicke mit einem Natriumacetatgehalt von etwa 2 Gew.-% wurde nach bekannten und nach dem erfindungsgemäßen Verfahren gewaschen. Nach dem bekannten Verfahren wird im Vergleichsbeispiel die Folie mit Warmwasser von 30°C beidseitig besprüht, wobei sich an der Oberseite ein Wasserfilm ausbildet, der durch schwache Neigung der Folie an einer Seite abläuft.

Bei dem erfindungsgemäßen Verfahren wird die gleiche Folie durch eine Vorrichtung geführt, in der zwischen Ober- und Unterseite der Folie eine Druckdifferenz besteht. In den vorliegenden Beispielen wird an der Unterseite der Folie mittels einer Vakuumpumpe ein Unterdruck erzeugt. Gleichzeitig wird die Oberseite der Folie so mit Wasser von 30°C besprüht, daß während der gesamten Waschzeit ein geschlossener Wasserfilm von ca. 1—2 mm Dicke auf der Folie erhalten bleibt.

Die Waschung wurde bei unterschiedlichen Verweilzeiten und Druckdifferenzen durchgeführt. Die Ergebnisse sind in der folgenden Tabelle zusammengefaßt. Dabei wurde die nach der Waschung in der Folie noch vorhandene Menge an Natriumacetat im Vergleichsbeispiel 1 gesetzt und bei den erfindungsgemäßen Beispielen in Relation dazu angegeben.

Tabelle 1

| Beispiel | Verweilzeit [sec] | Druckdifferenz [mbar] | relativer Natrium- acetatgehalt |
|---|---|---|---|
| Vergleich | 30 | — | 1 |
| 1 | 10 | 200 | 0,32 |
| 2 | 30 | 200 | 0,32 |
| 3 | 10 | 440 | 0,23 |
| 4 | 30 | 440 | 0,23 |

Beispiele 5—7

Eine Polychloroprenfolie, hergestellt durch Fällungskoagulation mittels einer 10%igen Kochsalzlösung, wurde wie in Beispiel 1 beschrieben bei unterschiedlichen Verweilzeiten gewaschen. Der Salzgehalt der Folie nach dem Waschvorgang ist in Relation zu dem einer konventionell gewaschenen Folie, bei der es gleich 1 gesetzt wurde, angegeben. Die Ergebnisse sind in der folgenden Tabelle aufgeführt.

Tabelle 2

| Beispiel | Verzweilzeit [sec] | Druckdifferenz [mbar] | relativer Salzgehalt |
|---|---|---|---|
| Vergleich | 30 | — | 1 |
| 1 | 15 | 200 | 0,78 |
| 2 | 20 | 200 | 0,69 |
| 3 | 30 | 200 | 0,49 |

Beispiel 8—10

Eine Butadien-Acrylnitril-Kautschukfolie, hergestellt durch Fällungskoagulation mittels einer 10%igen Kochsalzlösung, wurde wie in Beispiel 1 beschrieben bei unterschiedlichen Verweilzeiten gewaschen. Der Salzgehalt der Folie nach dem Waschvorgang ist in Relation zu dem einer konventionell gewaschenen Folie, bei der er gleich 1 gesetzt wurde, angegeben. Die Ergebnisse sind in der folgenden Tabelle aufgeführt.

Tabelle 3

| Beispiel | Verweilzeit [sec] | Druckdifferenz [mbar] | relativer Salzgehalt |
|---|---|---|---|
| Vergleich | 30 | — | 1 |
| 1 | 15 | 200 | 0,62 |
| 2 | 20 | 200 | 0,53 |
| 3 | 30 | 200 | 0,23 |

*II. Trocknung von Flächengebilden*

In den folgenden Beispielen wurde stets eine durch Gefrierkoagulation hergestellte Polychloroprenfolie von 1,7 mm Dicke mit einem Anfangswassergehalt von 70 Gew.-% des Gesamtgewichts eingesetzt und bis zu einem Endfeuchtigkeitsgehalt von 0,3 Gew.-% entfeuchtet. Bei den erfindungsgemäßen Beispielen wurde den Folien durch Einwirkung unterschieaflicher Druckdifferenzen und Durchsaugen von Luft verschiedener Temperaturen die in ihnen enthaltene Flüssigkeit entzogen. Dabei wurde zunächst jeweils Luft von Raumtemperatur (24°C) durch die Folien gesaugt und so ein Teil der Flüssigkeit entfernt. Die Entfernung der Restflüssigkeit erfolgte dann durch Durchsaugen von erwärmter Luft wie in der Tabelle angegeben.

In den Vergleichsbeispielen wurden die Folien auf einem konventionellen Quetschwerk mechanisch vorentwässert durch Ausquetschen mittels zweier Walzen bei einem Liniendruck von 10 kp/cm.

Anschließend wurde in einem Umlufttrockner thermisch zu Ende getrocknet bei Temperaturen, die jeweils den erfindungsgemäßen Beispielen entsprachen. Die Zeit für den gesamten Flüssigkeitsentzug wurde für die Vergleichsbeispiele stets gleich 1 gesetzt und für die erfindungsgemäßen Beispiele jeweils in Relation dazu angegeben. Die Versuchsergebnisse sind in der folgenden Tabelle zusammengestellt.

Tabelle

| Nr | Druck-differenz [mbar] | Lufttemperatur [°C] | | | | relative Gesamtzeit | |
| | | Teilentwässerung | | Endtrocknung | | | |
| | | Beisp. | Vergl. | Beisp. | Vergl. | Beisp. | Vergl. |
|---|---|---|---|---|---|---|---|
| 1 | 210 | 24 | — | 137 | 137 | 0,062 | 1 |
| 2 | 290 | 24 | — | 150 | 150 | 0,031 | 1 |
| 3 | 370 | 24 | — | 128 | 128 | 0,023 | 1 |
| 4 | 360 | 24 | — | 130 | 130 | 0,025 | 1 |
| 5 | 145 | 24 | — | 135 | 135 | 0,087 | 1 |

*III. Waschung und Trocknung von Flächengebilden*

In den Vergleichsbeispielen und den erfindungsgemäßen Beispielen wurde stets eine durch Gefrierkoagulation hergestellte Polychloroprenfolie von 1,7 mm Dicke mit einem Natriumacetatgehalt von etwa 2 Gew.-% und einem Angangswassergehalt von 75 Gew.-% des Gesamtgewichts eingesetzt und bis zu einem Endfeuchtigkeitsgehalt von 0,3 Gew.-% entfeuchtet.

In den Vergleichsbeispielen wird die Folie in üblicher Weise gewaschen durch beidseitiges Besprühen mit Wasser von 30°C. Dabei bildet sich an der Oberseite der Folie ein Wasserfilm aus, der durch schwache Neigung der Folie an einer Seite abläuft. Anschließend erfolgt eine Teilentwässerung der Folie durch Ausquetschen mittels zweier Walzen bei einem Liniendruck von 10 kp/cm. Dann wird in einem Umlufttrockner thermisch bis zu Ende getrocknet bei gleicher Lufttemperatur wie in den entsprechenden erfindungsgemäßen Beispielen (vgl. Tabelle).

In den erfindungsgemäßen Beispielen wird die Folie bei unterschiedlichen Druckdifferenzen mit Wasser von 30°C gewaschen. Der danach in der Folie noch vorhandene Salzgehalt (Natriumacetat) wird in Relation zum Salzgehalt bei den entsprechenden Vergleichsbeispielen angegeben, bei denen er gleich 1 gesetzt wird (vgl. Tabelle). Anschließend wird die Folie durch Durchsaugen von Luft von 24°C teilentwässert. Die endgültige Trocknung der Folie erfolgt dann durch Durchsaugen von heißer Luft unterschiedlicher Temperatur. Die hierfür erforderliche Zeit wird als relative Trockenzeit angegeben, bezogen auf die jeweils gleich 1 gesetzte Zeit für die Endtrocknung in den entsprechenden Vergleichsbeispielen. Die Ergebnisse sind in der folgenden Tabelle zusammengefaßt.

Tabelle

| Nr. | Druckdifferenz [mbar] | | Zeit [sec] | | relat. Salzgehalt | |
|---|---|---|---|---|---|---|
| | B[1] | V[1] | B | V | B | V |
| 1 | 200 | — | 10 | 30 | 0,32 | 1 |
| 2 | 197 | — | 10 | 30 | 0,31 | 1 |
| 3 | 197 | — | 10 | 30 | 0,32 | 1 |
| 4 | 147 | — | 10 | 30 | 0,40 | 1 |
| 5 | 293 | — | 10 | 30 | 0,28 | 1 |
| 6 | 313 | — | 10 | 30 | 0,27 | 1 |
| 7 | 287 | — | 10 | 30 | 0,29 | 1 |
| 8 | 176 | — | 10 | 30 | 0,36 | 1 |
| 9 | 140 | — | 10 | 30 | 0,40 | 1 |
| 10 | 333 | — | 10 | 30 | 0,26 | 1 |

1) B = erfindungsgemäßes Beispiel

V = Vergleichsbeispiel

Tabelle (Fortsetzung)

| Nr. | Teilentwässern | | | | Endtrockung | | | |
|---|---|---|---|---|---|---|---|---|
| | Zeit [sec] | | Restfeuchtigkeit [%] | | Lufttemperatur [°C] | | relat. Trockenzeit | |
| | B | V | B | V | B | V | B | V |
| 1 | 8,9 | 0,2 | 22 | 28 | 200 | 200 | 0,114 | 1 |
| 2 | 14,3 | 0,2 | 20 | 28 | 201 | 201 | 0,080 | 1 |
| 3 | 8,9 | 0,2 | 23 | 28 | 260 | 260 | 0,080 | 1 |
| 4 | 7,8 | 0,2 | 39 | 28 | 197 | 197 | 0,130 | 1 |
| 5 | 8,9 | 0,2 | 12 | 28 | 200 | 200 | 0,060 | 1 |
| 6 | 8,9 | 0,2 | 11 | 28 | 170 | 170 | 0,060 | 1 |
| 7 | 8,9 | 0,2 | 13 | 28 | 229 | 229 | 0,050 | 1 |
| 8 | 8,9 | 0,2 | 24 | 28 | 223 | 223 | 0,088 | 1 |
| 9 | 8,9 | 0,2 | 40 | 28 | 170 | 170 | 0,072 | 1 |
| 10 | 11,1 | 0,2 | 10 | 28 | 170 | 170 | 0,040 | 1 |

# 0 001 063

## Patentansprüche

1. Verfahren zur Waschung und/oder Trocknung von flüssigkeitshaltigen Flächengebilden hergestellt durch Fällung mit Elektrolyten oder thermische oder elektrische Koagulation aus natürlichem und/oder synthetischem Kautschuk, dadurch gekennzeichnet, daß die Flächengebilde mittels einer auf sie einwirkenden Druckdifferenz von 1 mbar bis 6 bar von einer Waschflüssigkeit und/oder von einem inerten gasförmigen Medium durchströmt und dabei von Verunreinigungen bzw. der Waschflüssigkeit befreit und/oder getrocknet werden.

2. Verfahren nach Anspruch 1, dadurch gekennzeichnet, daß die einwirkende Druckdifferenz 100 mbar bis 3 bar beträgt.

3. Verfahren nach Anspruch 1, dadurch gekennzeichnet, daß die einwirkende Druckdifferenz 300 bis 700 mbar beträgt.

4 Verfahren nach Ansprüchen 1 bis 3, dadurch gekennzeichnet, daß das inerte gasförmige Medium eine Temperatur von 10 bis 400°C besitzt.

5. Verfahren nach Ansprüchen 1 bis 3, dadurch gekennzeichnet, daß das Flächengebilde unter Druckdifferenz 0,5 bis 1000 Sekunden gewaschen und getrocknet wird.

6. Verfahren nach Ansprüchen 1 bis 3, dadurch gekennzeichnet, daß das Flächengebilde eine Folie darstellt.

7. Verfahren nach Ansprüchen 1 bis 3, dadurch gekennzeichnet, daß das Flächengebilde aus Polychloropren oder Butadieneacrylnitrilcopolymerisaten besteht.

8. Verfahren nach Ansprüchen 1 bis 3 dadurch gekennzeichnet, daß das Flächengebilde auf ein Transportband aufgebracht wird, das aus einem oder mehreren übereinanderliegenden Geweben aus Metall und/oder Kunststoff und/oder Textil mit gleichen oder unterschiedlichen offenen Flächen besteht.

## Revendications

1. Procédé de lavage et/ou de séchage d'articles à grande surface contenant un liquide, fabriqués par précipitation avec des électrolytes ou par coagulation thermique ou électrique, au départ de caoutchouc naturel et/ou synthétique, caractérisé en ce que les articles à grande surface, au moyen d'une différence de pression agissant sur ceux-ci de 1 mbar à 6 bars, sont traversés par un liquide de lavage et/ou par un milieu gazeux inerte et sont ainsi débarrassés des impuretés ou du liquide de lavage et/ou séchés.

2. Procédé selon la revendication 1, caractérisé en ce que la différence de pression agissante s'élève à 100 mbars à 3 bars.

3. Procédé selon la revendication 1, caractérisé en ce que la différence de pression agissante s'élève à 300 à 700 mbars.

4. Procédé selon l'une quelconque des revendications 1 à 3, caractérisé en ce que le milieu gazeux inerte possède une température de 10 à 400°C.

5. Procédé selon l'une quelconque des revendications 1 à 3, caractérisé en ce que l'article à grande surface est lavé et séché pendant un temps de séjour de 0,5 à 1000 secondes.

6. Procédé selon l'une quelconque des revendications 1 à 3, caractérisé en ce que l'article à grande surface est une feuille.

7. Procédé selon l'une quelconque des revendications 1 à 3, caractérisé en ce que l'article à grande surface est en polychloroprène ou en des copolymères de butadiène-acrylonitrile.

8. Procédé selon l'une quelconque des revendications 1 à 3, caractérisé en ce que l'article á grande surface est appliqué sur une bande transporteuse qui consiste en un ou plusieurs tissus superposés en métal et/ou matière plastique et/ou matière textile ayant des surfaces ouvertes identiques ou différentes.

## Claims

1. Process for washing and/or drying liquid-containing sheet products produced by precipitation with electrolytes or thermal or electric coagulation from natural and/or synthetic rubber, characterised in that a washing liquid and/or an inert gaseous medium is caused to flow through the sheets by means of a pressure difference of 1 mbars to 6 bars acting on them and the sheets are thereby freed from impurities or the washing liquid and/or dried.

2. Process according to claim 1, characterised in that the pressure difference acting on the sheets is 100 mbars to 3 bars.

3. Process according to claim 1, characterised in that the pressure difference acting on the sheets is 300 to 700 mbars.

4. Process according to claims 1 to 3, characterised in that the inert gaseous medium has a temperature of 10 to 400°C.

5. Process according to claims 1 to 3, characterised in that the sheet product is washed and dried under a pressure difference for 0.5 to 1000 seconds.

**0 001 063**

6. Process according to claims 1 to 3, characterised in that the sheet is a foil.

7. Process according to claims 1 to 3, characterised in that the sheet consists of polychloroprene or butadiene acrylonitrile copolymers.

8. Process according to claims 1 to 3, characterised in that the sheet is placed on a conveyor belt which consists of one or more superimposed webs of metal and/or plastics material and/or textile having identical or differing open surfaces.